# EUROPEAN PATENT SPECIFICATION

(11) **EP 3 024 073 B1**
(45) Date of publication and mention of the grant of the patent: **15.11.2017**
(21) Application number: 14826230.6
(22) Date of filing: 09.07.2014
(51) Int. Cl.: H01M 4/90, H01M 8/1246, H01M 8/124

(54) **COMPOSITE MATERIAL FOR FUEL CELL, MANUFACTURING METHOD OF COMPOSITE MATERIAL FOR FUEL CELL, AND FUEL CELL**
VERBUNDMATERIAL FÜR BRENNSTOFFZELLEN, VERFAHREN ZUR HERSTELLUNG DES VERBUNDMATERIALS FÜR BRENNSTOFFZELLEN SOWIE BRENNSTOFFZELLE
MATÉRIAU COMPOSITE POUR PILE À COMBUSTIBLE, PROCÉDÉ DE FABRICATION DU MATÉRIAU COMPOSITE POUR PILE À COMBUSTIBLE, ET PILE À COMBUSTIBLE

(30) Priority: 18.07.2013 JP 2013149336
(43) Date of publication of application: 25.05.2016
(73) Proprietor: Sumitomo Electric Industries, Ltd., Osaka-shi, Osaka 541-0041 (JP)
(72) Inventor: TAKEUCHI, Hisao, Itami-shi Hyogo 664-0016 (JP); MATSUURA, Takashi, Itami-shi Hyogo 664-0016 (JP); HIRAIWA, Chihiro, Itami-shi Hyogo 664-0016 (JP); MIZUHARA, Naho, Itami-shi Hyogo 664-0016 (JP); HIGASHINO, Takahiro, Itami-shi Hyogo 664-0016 (JP); MAJIMA, Masatoshi, Itami-shi Hyogo 664-0016 (JP)
(74) Representative: Hoffmann Eitle
(86) International application number: PCT/JP2014/068285
(87) International publication number: WO 2015/008674

(56) References cited:
- EP-A1- 1 281 694
- FR-A1- 2 969 179
- JP-A- 2001 307 546
- JP-A- 2011 029 149
- JP-A- 2012 104 308
- JP-A- 2012 104 308
- JP-A- 2012 234 747
- JP-A- 2013 041 673
- JP-A- 2013 078 714

## Description

### Technical Field

The present invention relates to a composite material for a fuel cell, a method for producing a composite material for a fuel cell, and a fuel cell. Specifically, the present invention relates to, in a solid-oxide fuel cell, a composite material for a fuel cell and so, the composite material being capable of enhancing the power generation performance of an electrolyte layer.

### Background Art

A solid-oxide fuel cell (hereinafter, referred to as an "SOFC") includes an electrolyte-electrode laminate in which an anode layer and a cathode layer are arranged on the respective sides of a solid electrolyte layer. To reduce resistance to ionic conduction in the solid electrolyte layer, the solid electrolyte layer is preferably formed so as to have a minimum thickness. The formation of a thinner solid electrolyte layer reduces the strength of the solid electrolyte layer, thereby causing problems in the production process and when the fuel cell is used. Thus, a structure (anode support structure) in which the anode layer stacked on the solid electrolyte layer has a large thickness to ensure the strength of the laminate is often used.

As a method for producing the electrolyte-electrode laminate, a method has been studied in which an electrolyte powder is applied to an anode layer powder compact in a thin layer and the resulting electrolyte-anode laminate is co-fired (see PTL 1). Also known is a method for producing an electrolyte-electrode laminate using indium-doped barium zirconate (BZI) on a NiO-containing Y-doped barium zirconate (BZY) anode substrate (see PTL 2). In this setup, during sintering indium in the BZI evaporates and is substituted by yttrium to yield a BZY electrolyte.

### Citation List

### Patent Literature

PTL 1: Japanese Unexamined Patent Application Publication No. 2001-307546
PTL 2: JP 2012 104308 A

### Summary of Invention

### Technical Problem

Using the foregoing structure ensures high strength of the electrolyte-anode laminate while the solid electrolyte layer is set to have a small thickness. However, in the case where Ni is used as a catalyst, the performance of the solid electrolyte layer is disadvantageously decreased at the time of firing.

For example, in the case where a BaZrO₃-Y₂O₃ (hereinafter, referred to as "BZY") powder is used as an electrolyte material and where an anode powder material in which nickel (Ni) or nickel oxide (NiO) serving as a catalyst is added to the BZY powder is used as an anode material, the ionic conductivity of the solid electrolyte layer is disadvantageously liable to decrease. Hitherto, the electrolyte-anode laminate has been produced by applying the BZY powder to a surface of a formed article, the formed article being produced by compacting the anode powder material to a predetermined thickness, and performing co-firing at 1400°C to 1600°C. In this case, the ionic conductivity inherent to the solid electrolyte layer composed of BZY is decreased. In the case where the solid electrolyte layer is used for a fuel cell, the power generation performance is often decreased, compared with a theoretical power generation performance.

Although details of the cause of the decrease in power generation performance are not clear, nickel added to the anode layer is presumed to affect the solid electrolyte layer to inhibit the ionic conductivity.

The present invention has been accomplished in order to solve the foregoing problems. It is an object of the present invention to provide a composite material for a fuel cell, in which in the case where an electrolyte-anode laminate is co-fired, the composite material is capable of inhibiting a decrease in the ion conduction performance of a solid electrolyte layer to enhance the power generation performance of the fuel cell. Solution to Problem

An aspect of the present invention provides a composite material for a fuel cell, the composite material including a solid electrolyte layer and an anode layer stacked on the solid electrolyte layer, in which the solid electrolyte layer is composed of yttrium-doped barium zirconate (BaZrO₃-Y₂O₃), and the anode layer contains yttrium-doped barium zirconate (BaZrO₃-Y₂O₃), a nickel (Ni) catalyst, and a Y₂O₃ additive, the Y₂O₃ additive being located at least at an interfacial portion with the solid electrolyte layer.

The incorporation of the additive containing the rare-earth element into the anode layer does not result in a decrease in the ion conduction performance of the solid electrolyte layer even in the case of co-firing a laminate composed of a solid electrolyte material and an anode material, and enhances the power generation performance of a fuel cell including the laminate.

### Advantageous Effects of Invention

Even in the case where nickel, which is inexpensive compared with noble metals, such as platinum (Pt), is used as a catalyst and where the anode layer and the solid electrolyte layer are co-fired, the ion conduction performance is not decreased. Brief Description of Drawings

[Fig. 1] Figure 1 is a cross-sectional view of the structure of a composite material for a fuel cell according to an embodiment of the present invention.
[Fig. 2] Figure 2 is a schematic cross-sectional view of a fuel cell including a composite material for a fuel cell according to an embodiment of the present invention.
[Fig. 3] Figure 3 is a table illustrating differences in composition between a fuel cell including a composite material for a fuel cell according to an embodiment and a fuel cell including a conventional composite material for a fuel cell, and comparisons in power generation performance there between.
[Fig. 4] Figure 4 is a phase diagram of a material contained in an anode layer, the phase diagram being an excerpt from J.J. Lander, J. Am. Chem. Soc., 73, 2451 (1951).
[Fig. 5] Figure 5 is a ternary phase diagram of a material contained in an anode layer in the temperature range of 1000°C to 1350°C, the ternary phase diagram being depicted with reference to a phase diagram illustrated in J. Solid State Chem., 88 [1] 291-302(1990).

### Description of Embodiments

### [Discussion of problem of conventional electrolyte-anode laminate]

The inventors of the present invention have conducted intensive studies on a conventional electrolyte-anode laminate and have found the following cause of a reduction in ion conduction performance.

For example, in a conventional electrolyte-anode laminate including a solid electrolyte layer composed of BZY, which is defined as above, and an anode layer composed of a material in which Ni is added as a catalyst to the BZY in the form of, usually, NiO, the inventors have conducted detailed studies on the composition of the solid electrolyte layer after firing and have found that the Ni component is present in the entire region of the solid electrolyte layer in high concentration. The Ni component was clearly the catalytic component added to the anode layer. However, it was unclear how the Ni component moved to the electrolyte layer and whether the Ni component inhibited the ionic conductivity of the solid electrolyte layer or not.

Thus, the inventors have made an experimental electrolyte-anode laminate in which the migration of the Ni component to the solid electrolyte layer is inhibited and the concentration of the Ni component in the solid electrolyte layer is reduced, and have compared a fuel cell including the electrolyte-anode laminate with a fuel cell including a conventional electrolyte-anode laminate. As a result, the inventors have found that a reduction in the amount of the Ni component in the solid electrolyte layer increases the power generation performance.

### [Outline of embodiments of the present invention]

An embodiment of the present invention provides a composite material for a fuel cell, the composite material including a solid electrolyte layer and an anode layer stacked on the solid electrolyte layer, in which the solid electrolyte layer is composed of yttrium-doped barium zirconate (BaZrO₃-Y₂O₃), and the anode layer contains yttrium-doped barium zirconate (BaZrO₃-Y₂O₃), a nickel (Ni) catalyst, and a Y₂O₃ additive, the Y₂O₃ additive being located at least at an interfacial portion with the solid electrolyte layer.

Preferably, the amount of the Y₂O₃ additive is, in an atomic ratio of the yttrium, 0.001 to 2 times the amount of the yttrium in the electrolyte component contained in the anode layer.

When the amount of the Y₂O₃ additive is, in an atomic ratio of the yttrium, less than 0.001 times the amount of the yttrium in the electrolyte component contained in the anode layer, the effect of inhibiting a reduction in ionic conductivity is negligibly provided, thus failing to enhance the power generation performance of a fuel cell. When the amount of the Y₂O₃ additive is, in an atomic ratio of the yttrium, more than 2 times the amount of the yttrium in the electrolyte component contained in the anode layer, an affinity for the solid electrolyte layer can be reduced to reduce interlayer adhesion, and the composition of the solid electrolyte layer can be changed to reduce the ionic conductivity. More preferably, the amount of the Y₂O₃ additive is, in an atomic ratio of the yttrium, 0.01 to 1.5 times the amount of the yttrium in the electrolyte component contained in the anode layer. When the amount of the Y₂O₃ additive is 0.01 or more times, a reaction inhibition effect is markedly provided. When the amount of the Y₂O₃ additive is 1.5 or less times, the reduction in interlayer adhesion and the effect on the composition of the solid electrolyte layer are significantly small.

Preferably, the anode layer is such that the ratio (B/A) of the number (B) of atoms of the Ni catalyst to the number (A) of atoms of cationic elements other than the Ni catalyst is in the range of 0.5 to 10. When the ratio of the number of atoms of the Ni catalyst to the number of atoms of the cationic elements other than the Ni catalyst is less than 0.5, a sufficient catalytic effect is not provided, and the electron conductivity of the anode layer is not ensured. When the ratio of the number of atoms of the Ni catalyst to the number of atoms of the cationic elements other than the Ni catalyst is more than 10, a volume change during reduction from NiO to Ni can be increased. Furthermore, the difference of the thermal expansion coefficient between the solid electrolyte layer and the anode layer can be increased to increase the thermal stress, thereby possibly causing a break of the electrolyte layer and an increase in the amount of Ni diffused into the electrolyte layer.

Yttrium-doped barium zirconate is used in the present invention as a solid electrolyte contained in the solid electrolyte layer. As the additive, yttrium oxide (Y₂O₃) is used. The Y₂O₃ additive may be added to the entire anode layer. The addition of the Y₂O₃ additive to at least an interfacial portion with the electrolyte layer should be effective. For example, an anode layer containing the Y₂O₃ additive may be arranged between the solid electrolyte layer and a conventional anode layer.

The composite material for a fuel cell according to the present invention may be produced by a method including a laminate formation step of integrally laminating a powder material to be formed into the solid electrolyte layer and a powder material to be formed into the anode layer, and a firing step of thermally sintering the resulting laminate. In the laminate formation step, the anode layer may have a structure including two layers: a layer which is located adjacent to the solid electrolyte layer and which contains the additive; and a layer which is located remote from the solid electrolyte layer the other side and which does not contain the additive.

### [Details of embodiments of the present invention]

Embodiments of the present invention will be described below with reference to the drawings.

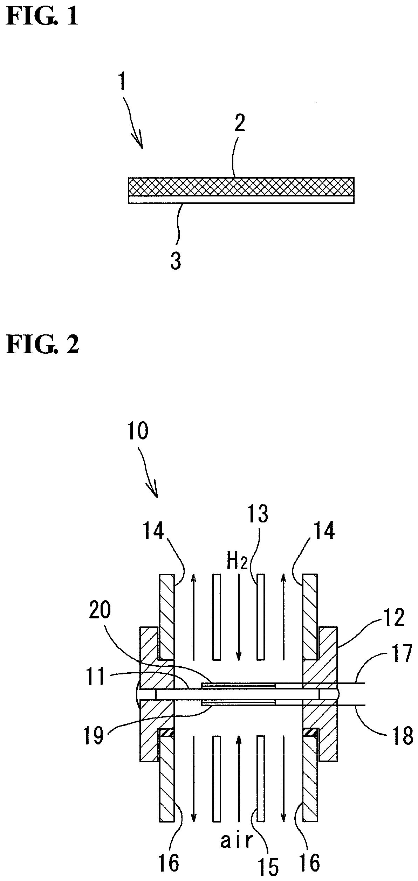

Figure 1 illustrates a cross-sectional view of a composite material for a fuel cell according to an embodiment. A composite material 1 for a fuel cell according to the embodiment is in the form of an electrolyte-anode laminate including an anode layer 2 and a solid electrolyte layer 3.

The solid electrolyte layer 3 is produced by firing a powder composed of yttrium-doped barium zirconate (hereinafter, referred to as "BZY") which is a solid solution of barium zirconate (BaZrO₃) and yttrium oxide (Y₂O₃). The ratio of Zr to Y in the BZY is 8:2. The solid-solution powder seemingly has the chemical formula Ba₁₀(Zr₈·Y₂)O₂₉.

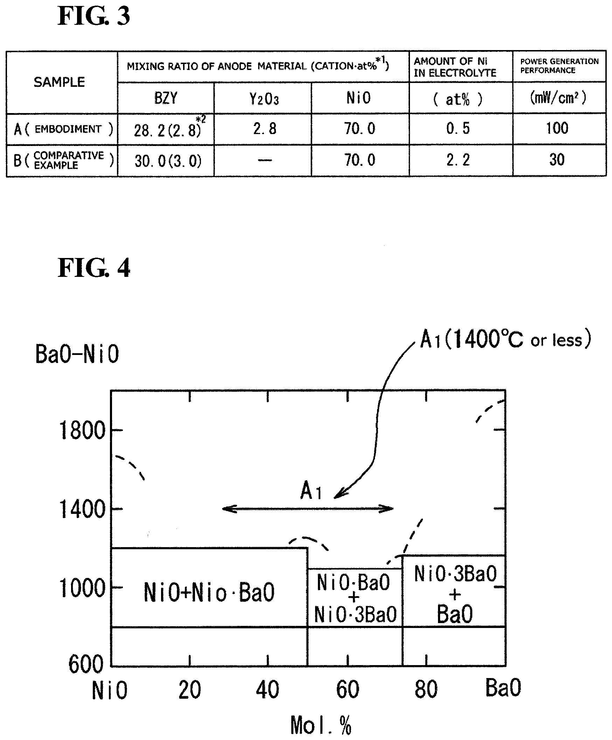

As powder materials used to form the anode layer 2 according to the embodiment, the BZY powder used for the solid electrolyte layer 3, a nickel oxide powder (hereinafter, referred to as "NiO") serving as a catalyst, and an Y₂O₃ powder serving as an additive containing a rare-earth element were prepared in such a manner that the mixing ratio (cation·at%) listed in A of Fig. 3 was achieved. As a comparative example, materials used to form a conventional anode layer were prepared in such a manner that the mixing ratio listed in B of Fig. 3 was achieved. Regarding *1 in Fig. 3, the "cation" indicates Ba, Zr, Y, and Ni, and "at%" indicates atomic percent with respect to the cations alone. Regarding *2 in Fig. 3, each of the numbers in parentheses indicates the content of Y atoms in BZY. Note that sample A according to the embodiment is composed of a material additionally containing the Y₂O₃ powder in an amount of 2.8%, in place of the BZY component used in the anode material containing the conventional components for sample B.

Polyvinyl alcohol (PVA) serving as a molding aid was added to each of the powder mixtures in an amount of 20% by volume. The resulting powder mixtures were formed into compacts by uniaxial pressing so as to have a diameter of 20 mm and a thickness of 2 mm, thereby producing anode compact A according to the embodiment and anode compact B according to the comparative example.

To the BZY powder, 50% by weight of EC vehicle (experimental EC vehicle 3-097, manufactured by Nisshin Kasei Co., Ltd.) serving as a binder was added with respect to the amount of the BZY powder. A BZY powder slurry was prepared using 2-(2-butoxyethoxy)ethyl acetate and α-terpineol as a solvent. The BZY powder slurry was applied to a side of each of anode compact A and anode compact B by screen printing to form films to be formed into solid electrolyte layers, the films each having a thickness of about 20 µm, thereby forming multilayer laminates according to the embodiment A and the comparative example B respectively.

These multilayer laminates were heated at 700°C for 24 hours in air to remove the resin components and then fired at 1500°C for 10 hours in an oxygen atmosphere, thereby providing electrolyte-anode laminates. The rate of shrinkage due to the firing was about 20%.

To evaluate the state of the reaction of Ni with the solid electrolyte layer after the firing, the amount of Ni on a surface of each solid electrolyte layer opposite the surface adjacent to a corresponding one of the anode layers was quantitatively determined by energy dispersive X-ray spectroscopy (EDX). Figure 3 lists the results. In sample B (comparative example) in which BZY and NiO were mixed together in the same way as in the related art, a high concentration of Ni (2.2 at%, on a cation basis) was detected. In contrast, in sample A according to the embodiment, the concentration of Ni was significantly reduced (0.5 at%). It was found that the addition of Y₂O₃ inhibited the migration of Ni to the solid electrolyte layer 3.

The electrolyte-anode laminates were heated at 700°C for 1 hour in a H₂ atmosphere to reduce the anode layers and to deposit metallic Ni, thereby providing the composite material 1 for fuel cells. A La-Sr-Co-Fe-O (LSCF) powder slurry to be formed into cathode layers was applied to a surface of each solid electrolyte layer 3 opposite the surface adjacent to a corresponding one of the anode layers 2 to form the cathode layers each having a thickness of about 10 µm, thereby forming electrolyte-electrode laminates 11. Fuel cells 10 illustrated in Fig. 2 were produced using these electrolyte-electrode laminates 11.

Each of the fuel cells 10 includes the electrolyte-electrode laminate 11 supported in the middle of a cylindrical case 12, channels 13 and 14 configured to allow a fuel gas to act on one side of the cylindrical case, and channels 15 and 16 configured to allow air to act on the other side. Platinum meshes 19 and 20 serving as collectors are arranged on a surface of the anode electrode and a surface of the cathode electrode, respectively, of each electrolyte-electrode laminate 11. Lead wires 17 and 18 extending to the outside are connected to the platinum meshes 19 and 20, respectively.

The power generation performance of the fuel cells 10 were measured when the fuel cells 10 were operated at 600°C while hydrogen serving as a fuel gas was allowed to flow at a flow rate of 20 to 100 cc/min to act on the anodes and air was allowed to flow at a flow rate of 20 to 100 cc/min to act on the cathodes.

As listed in Fig. 3, in the fuel cell including the electrolyte-electrode laminate formed using sample A, which was a composite material according to the embodiment, the power generation performance was 100 mW/cm². In contrast, in the fuel cell including the electrolyte-electrode laminate formed using sample B, which was a conventional composite material, the power generation performance was only 30 mW/cm². It was found that the fuel cell including the electrolyte-electrode laminate formed using sample A, which was a composite material according to the embodiment, provided high power generation performance.

### [Discussion of cause of migration of Ni component and inhibition of ionic conductivity in conventional composite material (electrolyte-anode laminate) for fuel cell]

The cause of the diffusion of a considerable amount of the Ni component in the solid electrolyte layer in the conventional electrolyte-anode laminate and the mechanism of action in the present invention were considered from a kinetic point of view and a thermodynamic point of view.

From the kinetic point of view, the inventors made the hypothesis that the Ni component changed to a liquid phase and migrated to the entire region of the solid electrolyte layer by capillarity and so forth in the firing step. This is presumably because the migration distance and the migration speed in the form of a liquid phase are markedly increased, compared with migration by solid-state diffusion.

The conventional anode layer is composed of the powder mixture of the BZY powder and the NiO powder. In the firing step, the following reaction seemingly occurs.

(Reaction formula 1) Ba₁₀(Zr₈Y₂)O₂₉ + 2NiO → Ba₈Zr₈O₂₄ + Y₂BaNiO₅ + BaNiO₂

Figure 4 is a phase diagram of a BaO-NiO-based compound. This figure clearly demonstrates that the BaO-NiO-based compound has a melting point of about 1100°C to 1200°C and the temperature of the liquid phase is low in the vicinity where the mixing ratio of BaO to NiO is 1:1. In the case of the composition BaNiO₂ deduced from reaction formula 1, the molar ratio of BaO to NiO is 50%. It is thus speculated that BaNiO₂ or a Ni-containing compound similar thereto is formed at a firing temperature of 1500°C in the form of a liquid phase. It is also speculated that the liquid-phase BaNiO₂ or Ni-containing compound similar thereto migrates through gaps in the solid electrolyte layer by capillarity and so forth in the firing step and is present throughout the solid electrolyte layer. It is thus speculated that the BaNiO₂ or Ni-containing compound similar thereto precipitates at grain boundaries in the solid electrolyte layer in a solidification process and so forth, and Ni forms a solid solution with BZY grains, thereby inhibiting the ionic conductivity through the grain boundaries in the solid electrolyte layer.

Based on the foregoing findings, the inventors have speculated that it is possible to inhibit the migration of the Ni component to the solid electrolyte layer by blocking the formation of the liquid phase of the Ni-containing compound. The inventors have conducted many experiments and have conceived the present invention.

### [Discussion of effect of composite material (electrolyte-anode laminate) for fuel cell according to embodiment of the present invention]

In the embodiment, the powder materials to be formed into the anode layer, the powder materials containing the additive that contains the rare-earth element, is fired in order to block the formation of BaNiO₂ in reaction formula 1.

Let us consider the case where regarding the anode layer, NiO is added as a catalyst component to the powder composed of the BZY, Y₂O₃ is added as the additive thereto, and the resulting mixture is fired.

If we assume that Y₂BaNiO₅ is formed in place of BaNiO₂, the amount of Y₂O₃ added is, at the maximum, equal to the amount of Y₂O₃ contained in BZY in the anode layer. For example, in the case where 20 at% of Zr in BaZrO₃ is replaced with Y, the addition of Y₂O₃ presumably leads to a reaction with NiO as represented by a reaction formula described below.

(Reaction formula 2) Ba₁₀(Zr₈Y₂)O₂₉ + 2NiO + Y₂O₃ → Ba₈Zr₈O₂₄ + 2Y₂BaNiO₅

In the case where the reaction represented by the foregoing reaction formula occurs by the addition of Y₂O₃ to the anode layer, BaNiO₂, which is formed according to reaction formula 1 described above, is not formed. In the case where this amount of Y₂O₃ is added, even if the total amount of Y in BZY reacts with NiO together with Ba, BaNiO₂ is not formed.

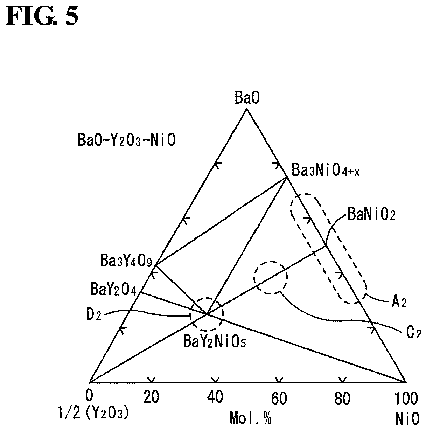

A region, where Y₂O₃ is not added, denoted by A2 in the ternary phase diagram illustrated in Fig. 5 corresponds to a region, where the liquidus temperature is markedly reduced, denoted by A1 in Fig. 4. The liquid phase is presumed to be formed here. When the total amount of Y in BZY migrates to the outside of grains together with Ba and occurs with NiO, the materials contained in the conventional anode layer have a composition such that grain boundaries having a composition denoted by C2 are formed. During firing, a Ba-Ni-O compound in a liquid phase state is presumed to be formed together with a BaY₂NiO₅ compound.

In the embodiment, Y₂O₃ is added; hence, a compound corresponding to a region denoted by D2 in the ternary phase diagram, i.e., BaY₂NiO₅, is presumed to be formed. BaY₂NiO₅ has a high melting point and is presumed to be in a solid-phase state even at 1500°C.

It is thus possible to block the formation of the liquid-phase state of the Ni-containing compound formed in the firing step and block the migration of the Ni component from the anode layer to the solid electrolyte layer. From a thermodynamic point of view, the addition of Y₂O₃ to the anode layer increases the chemical potential of Y in the anode layer. This is presumed to inhibit the migration of Y from BZY in the anode layer. The migration of Ba is less likely to occur if Ba does not migrate together with cations in the B-sites. This is presumed to inhibit the migration of Y and Ba to the outside of the BZY grains, i.e., the reaction of Y, Ba, and NiO.

A larger amount of Y₂O₃ added is preferred from the viewpoint of inhibiting the formation of the liquid phase. However, from the viewpoint of maintaining an affinity for BZY in the solid electrolyte layer and inhibiting the effect on the anode layer, a smaller amount of Y₂O₃ added is preferred. When the amount of Y₂O₃ added is, in an atomic ratio of the rare-earth element, less than 0.001 times the amount of the rare-earth element in the electrolyte component contained in the anode layer, the effect of inhibiting the formation of the liquid phase is small. In the case of more than 2 times, an affinity for the solid electrolyte layer can be reduced to reduce interlayer adhesion, and the ratio of Zr to Y in the electrolyte can be changed to reduce the ionic conductivity. More preferably, the amount of Y₂O₃ added is, in an atomic ratio of the rare-earth element, 0.01 to 1.5 times the amount of the rare-earth element in the electrolyte component contained in the anode layer.

When the amount of Y₂O₃ added is 0.01 or more times, a reaction inhibition effect is markedly provided. When the amount of Y₂O₃ added is 1.5 or less times, the reduction in interlayer adhesion and the effect on the composition of the solid electrolyte layer are significantly small.

Also in the case where the composite material (the embodiment) including A listed in Fig. 3 is used, 0.5 at% of Ni is detected in the solid electrolyte layer. It is presumed that the migration distance was small and thus the ionic conductivity was not significantly inhibited.

In the embodiment, the composite material including the solid electrolyte layer composed of the ionic conductor in which the A-site of the perovskite structure was occupied by barium (Ba) and the tetravalent cations in the B-sites were partially replaced with yttrium was used. However, according to the present invention, a composite material including a solid electrolyte layer composed of an ionic conductor in which the A-site is occupied by strontium (Sr), or barium (Ba) and strontium (Sr) may be used. In the embodiment, Y₂O₃ was added to the entire anode layer. However, the additive containing the rare-earth element may be added to at least an interfacial portion with the solid electrolyte layer. For example, a layer to which Y₂O₃ is added may be separately formed at the interfacial portion.

### Industrial Applicability

The electrolyte-anode laminate for a fuel cell having high power generation performance is provided at low cost.

### Reference Signs List

- 1: electrolyte-anode laminate (composite material for fuel cell)
- 2: anode layer
- 3: solid electrolyte layer
- 10: fuel cell
- 11: electrolyte-electrode laminate
- 12: cylindrical case
- 13: channel (fuel gas)
- 14: channel (fuel gas)
- 15: channel (air)
- 16: channel (air)
- 17: lead wire
- 18: lead wire
- 19: platinum mesh
- 20: platinum mesh

## Claims

1. A composite material for a fuel cell, comprising a solid electrolyte layer and an anode layer stacked on the solid electrolyte layer,
wherein the solid electrolyte layer is composed of yttrium-doped barium zirconate (BaZrO₃-Y₂O₃), and
the anode layer contains yttrium-doped barium zirconate (BaZrO₃-Y₂O₃), a nickel (Ni) catalyst, and a Y₂O₃ additive, the Y₂O₃ additive being located at least at an interfacial portion with the solid electrolyte layer.

2. The composite material for a fuel cell according to claim 1, wherein the amount of the Y₂O₃ additive is, in an atomic ratio of the yttrium, 0.001 to 2 times the amount of the yttrium in the yttrium-doped barium zirconate contained in the anode layer.

3. The composite material for a fuel cell according to claim 1, wherein the amount of the Y₂O₃ additive is, in an atomic ratio of the yttrium, 0.01 to 1.5 times the amount of the yttrium in the yttrium-doped barium zirconate contained in the anode layer.

4. The composite material for a fuel cell according to any one of claims 1 to 3, wherein in the anode layer, the ratio (B/A) of the number (B) of atoms of the Ni catalyst to the number (A) of atoms of cationic elements other than the Ni catalyst is in the range of 0.5 to 10.0.

5. A method for producing the composite material for a fuel cell according to any one of claims 1 to 4, the method comprising:
a laminate formation step of integrally laminating a powder material to be formed into the solid electrolyte layer and a powder material to be formed into the anode layer; and
a firing step of thermally sintering the resulting laminate.

6. A fuel cell comprising the composite material for a fuel cell according to any one of claims 1 to 4.

## Patentansprüche

1. Verbundstoff für eine Brennstoffzelle, umfassend eine Festelektrolytschicht und eine auf der Festelektrolytschicht geschichtete Anodenschicht,
worin die Festelektrolytschicht aus Yttriumdotiertem Bariumzirkonat (BaZrO₃-Y₂O₃) besteht und die Anodenschicht Yttrium-dotiertes Bariumzirkonat (BaZrO₃-Y₂O₃), einen Nickelkatalysator (Ni) und ein Y₂O₃-Additiv enthält, wobei sich das Y₂O₃-Additiv mindestens an einem Teil einer Grenzfläche zur Festelektrolytschicht befindet.

2. Verbundstoff für eine Brennstoffzelle gemäß Anspruch 1, worin die Menge des Y₂O₃-Additivs, bezogen auf das Atomverhältnis von Yttrium, das 0,001 bis 2-fache der Menge des in der Anodenschicht enthaltenen Yttriums im Yttrium-dotierten Bariumzirkonat ist.

3. Verbundstoff für eine Brennstoffzelle gemäß Anspruch 1, worin die Menge des Y₂O₃-Additivs, bezogen auf das Atomverhältnis von Yttrium, das 0,01 bis 1,5-fache der Menge des in der Anodenschicht enthaltenen Yttriums im Yttrium-dotierten Bariumzirkonat ist.

4. Verbundstoff für eine Brennstoffzelle gemäß mindestens einem der Ansprüche 1-3, worin das Verhältnis (B/A) der Anzahl an Atomen (B) des Ni-Katalysators zur Anzahl an Atomen (B) der kationischen Bestandteile außer des Ni-Katalysators in der Anodenschicht im Bereich von 0,5 bis 10,0 ist.

5. Verfahren zur Herstellung eines Verbundstoffs für eine Brennstoffzelle gemäß mindestens einem der Ansprüche 1-4, das Verfahren umfassend:
einen Laminatbildungsschritt zum integralen Laminieren eines in die Festelektrolytschicht zu bildenden Pulvermaterials und eines in die Anodenschicht zu bildenden Pulvermaterials; und
einen Brennschritt des thermischen Sinterns des resultierenden Laminats.

6. Brennstoffzelle umfassend den Verbundstoff für eine Brennstoffzelle gemäß mindestens einem der Ansprüche 1-4.

## Revendications

1. Matériau composite pour une pile à combustible, comprenant une couche d'électrolyte solide et une couche d'anode empilée sur la couche d'électrolyte solide,
dans lequel la couche d'électrolyte solide est composée de zirconate de baryum dopé à l'yttrium (BaZrO₃-Y₂O₃), et
la couche d'anode contient du zirconate de baryum dopé à l'yttrium (BaZrO₃-Y₂O₃), un catalyseur au nickel (Ni), et un additif Y₂O₃, l'additif Y₂O₃ étant situé au moins au niveau d'une partie interfaciale avec la couche d'électrolyte solide.

2. Matériau composite pour une pile à combustible selon la revendication 1, dans lequel la quantité de l'additif Y₂O₃ est, dans un rapport atomique de l'yttrium, de 0,001 à 2 fois la quantité de l'yttrium dans le zirconate de baryum dopé à l'yttrium contenu dans la couche d'anode.

3. Matériau composite pour une pile à combustible selon la revendication 1, dans lequel la quantité de l'additif Y₂O₃ est, dans un rapport atomique de l'yttrium, de 0,01 à 1,5 fois la quantité d'yttrium dans le zirconate de baryum dopé à l'yttrium contenu dans la couche d'anode.

4. Matériau composite pour une pile à combustible selon l'une quelconque des revendications 1 à 3, dans lequel, dans la couche d'anode, le rapport (B/A) du nombre (B) d'atomes du catalyseur au Ni sur le nombre (A) d'atomes d'éléments cationiques autres que le catalyseur au Ni se situe dans la plage de 0,5 à 10,0.

5. Procédé de production du matériau composite pour une pile à combustible selon l'une quelconque des revendications 1 à 4, le procédé comprenant :
une étape de formation de stratifié consistant à stratifier intégralement un matériau en poudre destiné à former la couche d'électrolyte solide et un matériau en poudre destiné à former la couche d'anode ; et
une étape de cuisson consistant à fritter thermiquement le stratifié résultant.

6. Pile à combustible comprenant le matériau composite pour une pile à combustible selon l'une quelconque des revendications 1 à 4.
